# FASCICULE DE BREVET EUROPEEN

(11) **EP 1 759 580 B1**
(45) Date de publication et mention de la délivrance du brevet: **07.05.2008**
(21) Numéro de dépôt: 06018091.6
(22) Date de dépôt: 30.08.2006
(51) Int. Cl.: A01K 41/00

(54) **Chariot destiné a contenir des oeufs à incuber**
Wagen zum Halten von Eiern zum Bebrüten
Cart for containing eggs to be incubated

(30) Priorité: 01.09.2005 FR 0508980
(43) Date de publication de la demande: 07.03.2007
(73) Titulaire: Zundel, Maurice, 22640 Plenee-Jugon (FR)
(72) Inventeur: Zundel, Maurice, 22640 Plenee-Jugon (FR)
(74) Mandataire: Maillet, Alain

(56) Documents cités:
- FR-A- 656 463
- US-A- 1 560 094
- US-A- 1 675 895
- US-A- 1 732 891

## Description

La présente invention concerne un chariot destiné à contenir des oeufs à incuber. L'invention trouve notamment application dans le domaine avicole.

Pour produire des poussins de manière industrielle, l'aviculteur introduit de manière classique des oeufs fécondés, donc contenant chacun un embryon, dans une enceinte d'incubation. Cette enceinte d'incubation se substitue au volatile (poule, canard, etc.) réalisant, dans la nature, la couvaison des oeufs, en reconstituant les conditions de durée, d'humidité, de température et de ventilation de la couvaison.

Une enceinte d'incubation comporte habituellement des serpentins de refroidissement et des ventilateurs prévus pour brasser l'air ambiant afin de maintenir dans l'enceinte une température et une hygrométrie correspondant à des conditions optimales d'incubation.

La demanderesse a par ailleurs proposé une enceinte d'incubation comportant un dispositif de soufflerie pourvu d'un élément souffleur permettant de répartir efficacement l'air soufflé dans l'enceinte d'incubation.

Dans ces deux modes de réalisation d'enceintes d'incubation, les oeufs sont classiquement disposés sur des chariots. Un tel chariot comporte un cadre monté sur roulettes à l'intérieur duquel sont installés les uns au dessus des autres des paniers destinés à contenir les oeufs. Tout en restant à un même endroit dans le chariot, ces paniers sont inclinés par rapport à l'horizontale à intervalles de temps prédéterminés à la manière d'une bascule. Ce basculement est destiné à éviter que l'embryon se colle à sa coquille.

Bien que des dispositifs de soufflerie tels que ceux proposés par la demanderesse soient efficaces, tous les oeufs ne sont pas soumis à des conditions d'incubation exactement identiques du fait notamment de leur disposition dans l'enceinte par rapport au dispositif de ventilation.

Par ailleurs, on a pu constater que le chargement des chariots avec les paniers était une tâche pénible pour les opérateurs qui en sont chargés, notamment du fait du poids de ces paniers et des difficultés de placement de ces paniers dans le chariot.

Le document US-A-1675895 décrit un chariot comprenant un cadre et des paniers contenant les oeufs à incuber se déplaçant automatiquement à l'intérieur du cadre.

Le but de l'invention est donc de proposer un chariot permettant d'améliorer les conditions d'incubation des oeufs et de travail des opérateurs tout en améliorant le rendement et le coût de production.

A cet effet, la présente invention suivant la revendication 1 concerne un chariot destiné à contenir des oeufs à incuber, comprenant un cadre supportant des paniers disposés les uns au dessus des autres dans ledit cadre. Ce chariot se caractérise en ce qu'il comporte en outre des moyens mécaniques déplaçant de manière autonome lesdits paniers à l'intérieur dudit cadre. Des modes de réalisation préférés de l'invention sont décrits dans les revendications 2 et 3.

L'invention permet de ventiler les oeufs de manière identique et dans des conditions optimales.

Lesdits moyens mécaniques sont constitués par deux ensembles de pignons rotatifs synchronisés, chaque ensemble comportant deux pignons entre lesquels est tendue une chaîne pourvue d'une pluralité d'équerres, lesdits paniers étant montés pivotant entre deux équerres respectivement disposées sur les deux chaînes desdits deux ensembles de pignons.

Les moyens mécaniques utilisés permettent de déplacer les paniers sans effort en maintenant les conditions d'incubation homogènes.

Lesdits moyens mécaniques incluent en outre des moyens d'inclinaison par intermittence desdits paniers par rapport à l'horizontale.

L'invention permet avantageusement d'assurer le déplacement et l'inclinaison simultanée des paniers.

Les moyens d'inclinaison des paniers sont constitués, d'une part, par au moins un rail de guidage et, d'autre part, par des moyens d'appui prévus sur chaque panier pour pouvoir prendre appui sur ledit rail de guidage de manière à faire pivoter ledit panier autour de moyens de pivotement.

Les moyens d'inclinaison utilisés permettent l'inclinaison des paniers lors de leur déplacement.

Dans un mode de réalisation préféré de l'invention, un rail de guidage est disposé de manière symétrique de part et d'autre d'un plan passant par les pignons.

L'invention permet de déplacer les paniers sans discontinuer et de les incliner.

Dans un autre mode de réalisation préféré de l'invention, les moyens d'appui sont constitués par des ergots prévus pour s'insérer dans le rail de guidage et pour y coulisser.

L'utilisation d'ergots comme moyens d'appui permet d'assurer une stabilité et un guidage des paniers lors de leur déplacement.

Les caractéristiques de l'invention mentionnées ci-dessus ainsi que d'autres apparaîtront plus clairement à la lecture de la description suivante d'un exemple de réalisation, ladite description étant faite en relation avec les dessins joints, parmi lesquels :
la Fig. 1 représente une vue de face d'un chariot d'incubation selon l'invention ;
la Fig. 2 représente une vue des moyens d'entraînement et d'appui d'un panier du chariot selon l'invention ; et
la Fig. 3 représente une vue en coupe selon le plan A-A du chariot d'incubation selon l'invention.

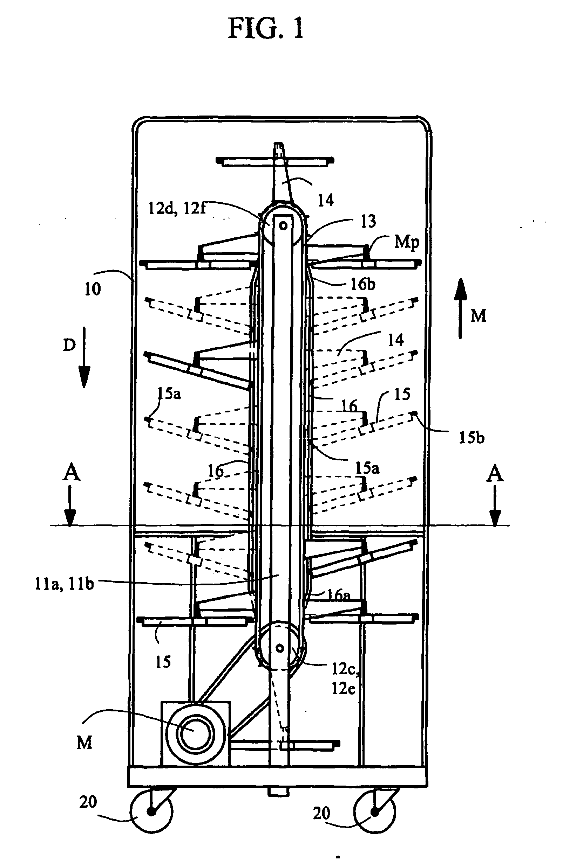

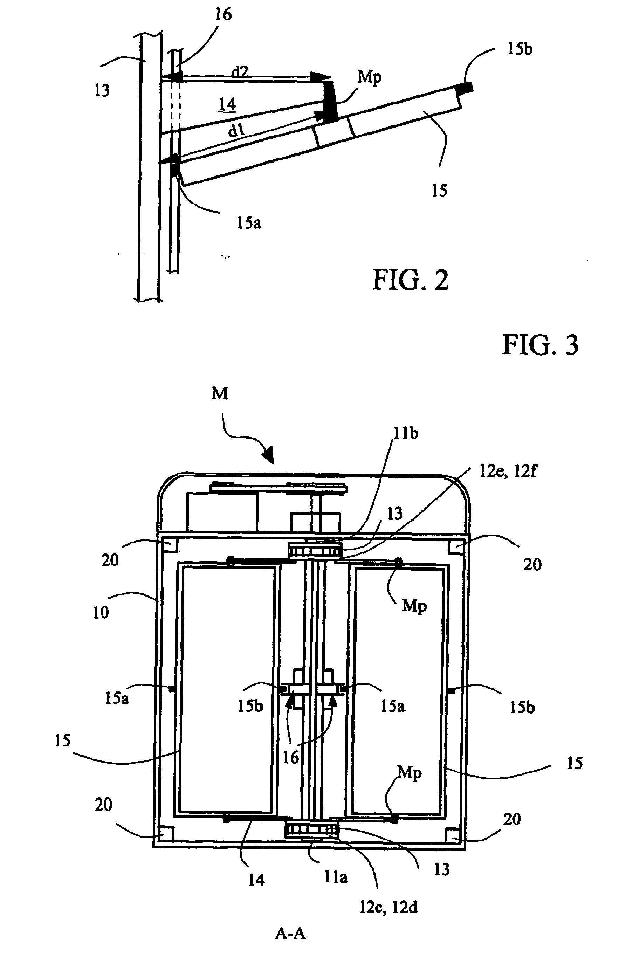

Un chariot d'incubation selon l'invention est représenté aux Figs. 1 et 3. Un tel chariot comporte un cadre 10 à base rectangle monté sur roulettes 20. Ce cadre 10 à roulettes permet de déplacer les oeufs sans efforts ou outil supplémentaire. On notera néanmoins que l'invention n'exclut pas la réalisation d'un cadre dépourvu de roulettes. Un tel cadre serait alors par exemple déplaçable par un chariot élévateur.

A la base de ce cadre 10 sont montés en vis-à-vis par une première extrémité deux montants 11a, 11b. Le montant 11a est prévu pour recevoir un premier ensemble de pignons rotatifs. Un premier pignon 12c est monté à proximité de la première extrémité du montant 11a et un second pignon 12d est monté à une seconde extrémité de ce montant 11a. Entre ces pignons 12c et 12d est tendue en boucle une chaîne 13.

De même, le montant 11b est prévu pour recevoir un second ensemble de pignons rotatifs. Un premier pignon 12e est monté à proximité de la première extrémité du montant 11 b et un second pignon 12f est monté à une seconde extrémité de ce montant 11b. Entre ces pignons 12e et 12f est tendue en boucle une chaîne 13.

Les pignons 12c et 12e d'une part et, les pignons 12d et 12f d'autre part, sont solidaires, si bien que la rotation d'un pignon entraîne la rotation synchronisée du pignon qui lui est solidaire.

Chaque chaîne 13 supporte une pluralité d'équerres 14 disposées en vis-à-vis sur chaque chaîne de manière à former des paires. Un panier 15 prévu pour contenir des oeufs à incuber est monté pivotant entre chaque paire d'équerres. Les ensembles de pignons rotatifs et les paires d'équerres 14 constituent des moyens mécaniques d'entraînement permettant de déplacer les paniers 15 de manière autonome dans le cadre 10.

Un panier 15 présente une forme générale rectangulaire avec deux côtés courts et deux côtés longs. Des moyens de pivotement Mp sont prévus sur chaque côté court pour relier le panier 15 à une équerre 14 et autoriser son pivotement. En l'absence de sollicitation, les moyens de pivotement Mp assurent donc au panier 15 une position équilibrée horizontale mais instable du fait de la possibilité de pivotement.

Cette possibilité de pivotement est utilisée pour assurer l'inclinaison des paniers 15 de manière à éviter que l'embryon présent dans chaque oeuf des paniers 15 ne se colle à sa coquille. A cet effet, est prévu au moins un rail de guidage 16. De préférence, deux rails de guidage s'étendent de part et d'autre d'un plan passant par les pignons 12c, 12d, 12e, 12f sur pratiquement toute la hauteur séparant les deux pignons 12 d'un même montant 11. De préférence, les rails de guidage sont symétriques l'un de l'autre par rapport audit plan. Dans le mode de réalisation représenté, chaque rail de guidage est constitué par un unique profilé droit monté verticalement, dont les extrémités constituent des rampes 16a, 16b inclinées vers ledit plan de symétrie. En variante, le rail de guidage pourrait également être constitué par une multitude de profilés prévus pour permettre l'inclinaison des paniers alternativement dans un sens et dans l'autre ou encore être constitué d'un rail ondulé, etc.

Sont également prévus sur chaque panier 15 des moyens d'appui 15a, 15b sur le rail de guidage 16. Dans le mode de réalisation tel que représenté à la Fig. 2, ces moyens d'appui 15a, 15b sont disposés au milieu de chaque long côté de panier 15 et constitués par des ergots pouvant s'insérer et coulisser dans les rails de guidage 16. Ces ergots permettent, lorsqu'ils sont insérés dans un des rails de guidage 16, de créer un appui du panier 15 correspondant contre le rail de guidage 16. Cet appui permet de faire pivoter les paniers 15 correspondants autour de ses moyens de pivotement Mp et ainsi de le déplacer jusqu'à une position inclinée. Cette position des paniers est maintenue lors du déplacement des paniers par les moyens d'entraînement tant que le rail de guidage fournit un appui aux ergots. Ainsi, lorsque les ergots s'acheminent le long des rampes 16a, 16b d'un des rails de guidage, l'appui fourni par le rail disparaissant progressivement, les paniers se redressent et prennent une position horizontale équilibrée.

La position inclinée des paniers est obtenue par la différence de longueur existant entre les moyens de pivotement Mp et les moyens d'appui 15a ou 15b, d'une part, et les moyens de pivotement Mp et le rail de guidage 16, d'autre part. Selon l'invention, la distance d1 séparant les moyens de pivotement des moyens d'appui 15a est plus importante que la distance d2 séparant les moyens de pivotement Mp du rail de guidage 16.

On notera que d'autres moyens d'appui tels que des roulettes prévues pour rouler le long du rail de guidage peuvent également fonctionner dans le cadre de l'invention.

Les rails de guidage 16 et les moyens d'appui 15a, 15b sur lesdits rails de guidage 16 constituent des moyens d'inclinaison par intermittence des paniers par rapport à l'horizontale.

Un motoréducteur M, prévu pour entraîner en rotation les ensembles des pignons rotatifs précédemment décrits, est installé sur un côté du cadre 10 à proximité d'un des pignons 12, par exemple le pignon 12e et relié à ce pignon par une courroie. Ce motoréducteur est de préférence pourvu d'un variateur de vitesse.

Le fonctionnement du chariot selon l'invention est décrit ci-après. D'abord, les paniers 15 du chariot sont remplis d'oeuis à incuber. Ensuite, les paniers 15 ainsi remplis sont chargés dans le chariot. Ce chargement peut être effectué en utilisant les ensembles de pignons rotatifs dont le fonctionnement sera décrit par la suite. On notera toutefois que la vitesse de déplacement des paniers peut être adaptée à ce chargement et qu'il est ainsi possible de faire se déplacer les paniers 15 rapidement entre deux chargements et de ralentir leur déplacement pour faciliter leur insertion et leur retrait du chariot. L'invention facilite ainsi le chargement par des opérateurs des paniers dans le chariot, du fait qu'elle permet l'insertion et le retrait des paniers à hauteur des bras desdits opérateurs.

Pour effectuer le chargement des paniers dans le chariot, les rails de guidage 16 sont rapprochés, manuellement ou automatiquement, de leur plan de symétrie. Ce rapprochement des rails de guidage par rapport au plan de symétrie permet *a contrario* leur éloignement par rapport aux moyens d'appui 15a, 15b des paniers 15 qui, en l'absence de contact avec ces rails 16, autorisent l'installation des paniers 15 dans une position horizontale d'équilibre.

Une fois que le chariot est chargé, les rails de guidage 16 sont écartés du plan de symétrie de manière à prendre une position de fonctionnement telle que représentée sur les Figs., le chariot est introduit dans l'enceinte d'incubation et le motoréducteur est mis en marche. L'enceinte est ensuite refermée de manière à créer des conditions d'incubation homogènes dans l'enceinte.

Le pignon 12e est alors entraîné en rotation par le motoréducteur. Le pignon 12c qui est solidaire du pignon 12e est également entraîné de manière synchronisée. Les chaînes 13 montées sur ces pignons 12c et 12e sont alors mises en mouvement.

Les paniers 15 montés sur ces chaînes 13 par l'intermédiaire des équerres 14 sont déplacés le long des chaînes de manière inclinée par interaction entre leurs moyens d'appui 15a et le rail de guidage 16. Ce déplacement s'effectue par exemple dans le sens de la montée illustrée par la flèche M.

A l'extrémité du rail de guidage, la rampe 16b amène progressivement chaque panier 15 jusqu'à une position équilibrée avant que les moyens d'appui 15a de ces paniers 15 ne se séparent du rail de guidage.

Au sommet des pignons, le sens de déplacement des chaînes 13 s'inverse. Les équerres 14 entraînées par les chaînes 13 pivotent autour des pignons 12d, 12f et poursuivent leur déplacement en sens inverse, illustré par la flèche D. Alors que les équerres 14 pivotent autour des pignons 12d, 12f, les paniers 15 pivotent autour des moyens de pivotement Mp et maintiennent ainsi une position horizontale équilibrée évitant la chute des oeufs. Par l'intermédiaire de la rampe 16a, les moyens d'appui 15b des paniers 15 s'engagent dans le rail de guidage 16 et, par appui sur ce dernier, entraînent l'inclinaison des paniers 15 correspondants tel que cela est représenté à la Fig. 1.

Le fonctionnement tel que décrit précédemment est répété tant que les ensembles de pignons rotatifs sont entraînés en rotation.

De manière préférée, un panier 15 retrouve une même position dans le chariot après une heure de déplacement. On notera toutefois que la vitesse de déplacement des paniers et la durée d'un cycle de déplacement est adaptable à l'utilisation prévue du chariot.

L'invention permet de déplacer de manière régulière les oeufs dans l'enceinte qui ainsi profitent tous des mêmes conditions de température et d'hygrométrie durant tout le cycle d'incubation pendant lequel l'enceinte n'est pas ouverte. En outre, le déplacement des paniers permet également d'améliorer la ventilation dans la partie de l'enceinte où se trouve le chariot. L'invention inclut également l'inclinaison des paniers de manière à assurer le bon développement des oeufs.

## Revendications

1. Chariot destiné à contenir des oeufs à incuber, comprenant un cadre (10) supportant des paniers (15) disposés les uns au dessus des autres dans ledit cadre, des moyens mécaniques déplaçant de manière autonome lesdits paniers à l'intérieur dudit cadre, lesdits moyens mécaniques étant constitués d'une part, par deux ensembles de pignons rotatifs synchronisés (12c,12e,12d,12f), chaque ensemble comportant deux pignons entre lesquels est tendue une chaîne (13) pourvue d'une pluralité d'équerres (14), lesdits paniers étant montés pivotant entre deux équerres respectivement disposées sur les deux chaînes desdits deux ensembles de pignons et, d'autre part, par des moyens d'inclinaison par intermittence desdits paniers par rapport à l'horizontale, **caractérisés en ce que** les moyens d'inclinaison des paniers sont constitués, d'une part, par au moins un rail de guidage (16) et, d'autre part, par des moyens d'appui (15a,15b) prévus sur chaque panier pour pouvoir prendre appui sur ledit rail de guidage de manière à faire pivoter ledit panier autour de moyens de pivotement (Mp).

2. Chariot selon la revendication 1, **caractérisé en ce qu**'un rail de guidage est disposé de manière symétrique de part et d'autre d'un plan passant par les pignons.

3. Chariot selon la revendication 1 ou 2, **caractérisé en ce que** les moyens d'appui sont constitués par des ergots prévus pour s'insérer dans le rail de guidage et pour y coulisser.

## Claims

1. Cart for containing eggs to be incubated, comprising a frame (10) supporting containers (15) arranged one above the other in the said frame, there being mechanical means which act independently to move the said containers within the said frame, the said mechanical means being formed on the one hand by two sets of synchronised rotary sprockets (12c, 12c, 12d, 12i), each set comprising two sprockets between which a chain (13) is tensioned, the chain (13) being provided with a plurality of angle members (14), the said containers being mounted to pivot between two angle members which are arranged on respective ones of the two chains associated with the two sets of sprockets, and on the other hand by means for intermittently tilting the said containers relative to the horizontal, **characterised in that** the means for tilting the containers arc formed on the one hand by at least one guide rail (16) and on the other hand by means for obtaining support (15a, 15b) which are provided on each container to enable support to be obtained from the said guide rail in such a way as to cause the said container to pivot about means for pivoting (Mp).

2. Cart according to claim 1, **characterised in that** a guide rail is arranged in a symmetrical position on either side of a plane passing through the sprockets.

3. Cart according to claim 1 or 2, **characterised in that** the means for applying pressure are formed by spigots which are intended to insert themselves in the guide rail and to slide therein.

## Patentansprüche

1. Wagen, der dazu bestimmt ist, Eier zum Rebrüten zu enthalten, umfassend einen Rahmen (10), der Körbe (15) trägt, die übereinander im Rahmen angeordnet sind, mechanische Mittel, die die Körbe autonom im Inneren des Rahmens verschieben, wobei die mechanischen Mittel einerseits von zwei synchronisierten rotierenden Zahnradeinheiten (12c, 12c, 12d, 12f) gebildet sind, wobei jede Einheit zwei Zahnräder umfasst, zwischen denen eine Kette (13) gespannt ist, die mit einer Vielzahl von Winkeleisen (14) versehen ist, wobei die Körbe schwenkbar zwischen zwei Winkeleisen montiert sind, die jeweils auf den beiden Ketten der beiden Zahntadeinheiten angeordnet sind, und andererseits von Mitteln zum intermittierenden Neigen der Körbe zur Horizontalen gebildet sind, **dadurch gekennzeichnet, dass** die Mittel zum Neigen der Körbe einerseits von mindestens einer Führungsschiene (16) und andererseits von Abstützungsmitteln (15a, 15b) gebildet sind, die auf jedem Korb vorgesehen sind, um auf der Führungsschiene derart abgestützt zu werden, dass sie den Korb um Schwenkmittel (Mp) schwenken.

2. Wagen nach Anspruch 1, **dadurch gekennzeichnet, dass** eine Führungsschiene symmetrisch beiderseits einer durch die Zahnräder verlaufenden Ebene angeordnet ist.

3. Wagen nach Anspruch 1 oder 2, **dadurch gekennzeichnet, dass** die Abstützungsmittel von Haken gebildet sind, die dazu vorgesehen sind, sich in die Führungsschiene einzufügen und in dieser zu gleiten.
